# EUROPÄISCHE PATENTSCHRIFT

(11) **EP 2 501 968 B1**
(45) Veröffentlichungstag und Bekanntmachung des Hinweises auf die Patenterteilung: **27.05.2015**
(21) Anmeldenummer: 10779785.4
(22) Anmeldetag: 16.11.2010
(51) Int. Cl.: F16K 31/122, B60T 15/02

(54) **MEHRSTUFIG SCHALTBARE VORGESTEUERTE VENTILANORDNUNG**
MULTI-STAGE SWITCHABLE PILOT-CONTROLLED VALVE ARRANGEMENT
ENSEMBLE SOUPAPE PILOTÉ À COMMUTATION À PLUSIEURS ÉTAGES

(30) Priorität: 18.11.2009 DE 102009053814
(43) Veröffentlichungstag der Anmeldung: 26.09.2012
(73) Patentinhaber: KNORR-BREMSE Systeme für Schienenfahrzeuge GmbH, 80809 München (DE)
(72) Erfinder: VÖLBEL, Heinz, 80809 München (DE); KRASSELT, Steffen, 81927 München (DE); GARTEN, Thomas, 81677 München (DE)
(74) Vertreter: Mattusch, Gundula
(86) Internationale Anmeldenummer: PCT/EP2010/067544
(87) Internationale Veröffentlichungsnummer: WO 2011/061171

(56) Entgegenhaltungen:
- EP-A1- 1 860 359
- EP-A2- 0 845 398
- EP-A2- 1 084 924
- DE-C- 715 272
- DE-C1- 4 023 845

## Beschreibung

Die vorliegende Erfindung betrifft eine vorgesteuerte Ventilanordnung mit mindestens einer in einem Ventilgehäuse untergebrachten Ventilmechanik zum mehrstufigen Schalten eines Druckluftflusses zwischen einem Speisedruckanschluss und einem Arbeitsleitungsanschluss, wobei über Drosselmittel in mindestens einer Schaltstufe ein gedrosselter Druckluftfluss schaltbar ist.

Das Einsatzgebiet der vorliegenden Erfindung erstreckt sich vornehmlich auf die Schienenfahrzeugtechnik. Im Rahmen pneumatischer Bremsanlagen kommen zur Steuerung des Bremsdruckes sowie hieran beteiligter Hilfsdrücke eine Vielzahl von unterschiedlichen Mehrwegeventilen zum Einsatz. Neben einfachen Schaltventilen mit 2/2- Ventilfunktion sind beispielsweise zum Be- und Entlüften von Druckluftaggregaten komplexere Mehrwegeventile erforderlich. Die vorliegende Erfindung lässt sich insbesonders auf Absperrventile von pneumatischen Bremsanlagen anwenden.

Aus der DE 40 23 845 C1 geht ein Absperrventil mit Drosselstellung hervor. Das Absperrventil besitzt ein Ventilgehäuse und einen Ventilsitz, gegen den mittels eines Betätigungsmechanismus ein Ventilteller verstellbar und andrückbar ist. Bei geschlossenem Ventil liegt zwischen Ventilteller und Ventilsitz eine ringförmige Dichtung. Der von einem Ventilkolben getragene Ventilteller ist mit den betriebsmäßig über einen Betätigungsmechanismus aufbringbaren Stellkräften elastisch verformbar. Innerhalb der bei geschlossenem Ventil von Ventilsitz und Ventilteller begrenzten Dichtzone ist im Ventilteller eine Öffnung vorgesehen. Der diese Öffnung aufweisende Teil des Ventiltellers ist durch Erhöhung des mit dem Betätigungsmechanismus aufbringbaren Schließdruckes gegen den Ventilkolben drückbar. Bei gegen den Ventilkolben gedrücktem Ventilteller liegt zwischen Ventilkolben und Ventilteller eine diese Öffnung umschließende Dichtung. Der Ventilteller ist als flacher Hohlkegel ausgebildet und trägt randseitig eine Dichtung.

Des Weiteren geht aus der EP 1 860 359 A1 ein normalerweise geschlossenes Ventil mit einem Meschanismus zur Regulierung von Kleinströmungsmengen hervor. Das Ventil umfasst einen Ventilschaft zum Öffnen und Schließen eines Fluiddurchgangs, eine Vorspanneinrichtung zum Vorspannen des Ventilschafts in einer Richtung, um den Fluiddurchgang zu schließen, einen Kolbenkörper, der in einem Zylinder in einer luftdichten Weise in Eingriff ist, um eine Druckkammer zum bewegen des Ventilschaftes in einer Ventilöffnungseinrichtung gegen die Vorspannkraft zu bilden und ein Anschlagmechanismus, der auf dem Zylinder vorgesehen ist, zum Steuern einer Bewegungsgrenze des Kolbenkörpers in der Ventilöffnungseinrichtung. Der Anschlagmechanismus umfasst eine durch einen Schraubeneingriff mit dem Zylinder koaxial in Eingriff stehendes Hubeinstellelement mit Ventilschaft, so dass eine Hubposition des Einstellelements relativ zum Zylinder eingestellt werden kann und eine ringförmige abgeschrägte Fläche an einem Ende des Hubeinstellelements, die gegenüber des Kolbenkörpers angeordnet ist. Eine bewegliche ventilöffnende Steuerfläche ist auf dem Kolbenkörper vorgesehen, um radial außerhalb der ringförmig abgeschrägten Oberfläche positioniert zu sein. Eine stationäre ventilöffnende Steuerfläche ist integral auf dem Zylinder vorgesehen, um gegenüber der beweglichen ventilöffnenden Steuerfläche angeordnet zu sein, wobei mindestens eine der beweglichen ventilöffnenden Steuerfläche und der stationären ventilöffnenden Steuerfläche eine abgeschrägte Oberfläche umfasst. Diese ist abgeschrägt, um einen Abstand zwischen der beweglichen ventilöffnenden Steuerfläche und der stationären ventilöffnenden Steuerfläche in einer Richtung zu einer äußeren Kante der abgeschrägten Oberfläche zu verringern. Ferner kann eine Vielzahl von Kugeln mit jedem der ringförmigen abgeschrägten Oberflächen gleichzeitig in Kontakt kommen.

Gemäß des allgemein bekannten Standes der Technik existieren zur Realisierung von Absperrmodulen pneumatischer Bremsanlagen Ventilanordnungen, die sich mehrstufig schalten lassen, um unter anderem auch einen gedrosselten Druckluftfluss zu ermöglichen. Hierfür werden gewöhnlich zwei 2/2-Wegeventile je nach Schaltstufe parallel geschaltet und getrennt angesteuert, wobei eines der beiden 2/2-Wegeventile in Reihe mit einer Drossel geschaltet ist, um die Schaltstufe eines gedrosselten Druckluftflusses zu realisieren. Eine solche Ventilanordnung fällt recht großbauend aus und der Montageaufwand der einzelnen Bauteile, insbesonders deren Verrohrung erscheint recht aufwendig.

Es ist daher die Aufgabe der vorliegenden Erfindung eine mehrstufig schaltbare Ventilanordnung mit Drosselstufe zu schaffen, die mit einfachen Bauteilen aufgebaut ist und besonders kompaktbauend ausfällt.

Die Aufgabe wird ausgehend von einer Ventilanordnung gemäß Oberbegriff von Anspruch 1 in Verbindung mit dessen kennzeichnenden Merkmal gelöst. Die nachfolgenden abhängigen Ansprüche geben vorteilhafte Weiterbildungen der Erfindung wider.

Die Erfindung schließt die technische Lehre ein, dass eine pneumatische Vorsteuerung einer mehrstufig schaltbaren Ventilanordnung einen ersten Steuerkolben umfasst, der in einer im Ventilgehäuse ausgebildeten ersten Steuerkammer untergebracht ist, und der eine koaxiale Ausnehmung zur Bildung einer zweiten Steuerkammer enthält, in der ein zweiter Steuerkolben untergebracht ist, so dass eine additive Steuerdruckbeaufschlagung beider Steuerkammern ein teleskopartiges Ausfahren eines vom zweiten Steuerkolben ausgehenden Stößels zur Erzeugung eines mehrstufigen Schalthubes für die Ventilmechanik erzeugt, um in mindestens einer zwischen der geschlossenen und geöffneten Ventilstellung liegenden Schaltstufe der Ventilmechanik den gedrosselten Druckluftfluss zu realisieren.

Vorteilhalterweise wird bei der erfindungsgemäßen Lösung diese Schaltstufe für den gedrosselten Druckluftfluss also dadurch erreicht, dass die Ventilmechanik gezielt eine Zwischenstellung einnimmt, bei welcher ein gegenüber der voll geöffneten Ventilstellung geringerer Strömungsquerschnitt zur Verfügung steht. Für eine solche Drosselung des Druckluftflusses bedarf es daher keiner separaten Drossel oder Blende, die - wie beim Stand der Technik - mit einem herkömmlichen Schaltventil kombiniert wird. Durch die funktionsintegrierte Bauweise der erfindungsgemäßen Ventilanordnung erfolgt eine effiziente Ausnutzung des Bauraums, so dass sich die erfindungsgemäße Lösung recht kompaktbauend realisieren lässt. Die Verkettung aller Ventilstellungen, nämlich der geschlossenen, mindestens einer gedrosselten und der geöffneten Ventilstellung, mittels ein und derselben Ventilmechanik erhöht die Ausfallsicherheit der Ventilanordnung, da nicht mehr einzelne Ventile mit Drossel, miteinander verrohrt werden müssen. Hierdurch steigt die Gerätesicherheit gegenüber den Lösungen des Standes der Technik.

Die per pneumatischer Vorsteuerung betätigte Ventilmechanik ist gemäß einer die Erfindung verbessernder Maßnahme nach Art eines Sitzventils ausgebildet, welches einen gehäusefesten Ventilsitz mit einem zugeordneten Verschlusselement mit Elastomerkörper umfasst, welches die pneumatische Vorsteuerung über den vorstehend erwähnten Stößel betätigt. Ein solches Sitzventil erweist sich für die erfindungsgemäße Anwendung als besonders robust und die Schaltstufen mit dem gedrosselten Druckluftfluss lassen sich mit einem Sitzventil unter geringem Schalthub darstellen, so dass eine präzise Drosselung mittels Drosselmittel in einem engen Toleranzfeld machbar ist.

Vorzugsweise sollte das Sitzventil eine normal-geschlossene Ventilfunktion aufweisen, indem eine im Ventilgehäuse integrierte Ventilrückstellfeder das Verschlusselement bei druckloser Vorsteuerung in der geschlossenen Schaltstellung hält. Bei einem Ausfall der Vorsteuerung würde die Ventilanordnung also selbsttätig die geschlossene Schaltstellung einnehmen, so dass kein Druckmittelfluss vom Speisedruckanschluss zum Arbeitsleitungsanschluss mehr möglich ist.

Mit der erfindungsgemäßen Ventilanordnung kann mindestens eine Schaltstufe mit einem gedrosselten Druckluftfluss, maximal können jedoch zwei derartige Schaltstufen realisiert werden. Ein erster gedrosselter Druckluftfluss einer ersten Schaltstufe ist durchführbar, indem nur der zweite Steuerkolben der Vorsteuerung beaufschlagt wird, also einer exklusiven Steuerdruckbeaufschlag unterliegt. Dagegen ist bei dieser ersten Schaltstufe der erste Steuerkolben nicht steuerdruckbeaufschlagt.

Für eine zweite Schaltstufe, die einen weiteren gedrosselten Druckluftfluss ermöglicht, der je nach Schalthub größer oder kleiner als der vorstehend erwähnte erste gedrosselte Druckluftfluss ist, wird allein der erste Steuerkolben der Vorsteuerung steuerdruckbeaufschlagt, wogegen der zweite Steuerkolben nicht mit einem Steuerdruck beaufschlagt wird. Auch bei der zweiten Schaltstufe hebt das Verschlusselement nur etwas vom zugeordneten Ventilsitz ab, um einen gegenüber der voll geöffneten Ventilstellung geringeren Strömungsquerschnitt für den Druckluftfluss bereitzustellen.

Die voll geöffnete Ventilstellung, welche einen ungedrosselten Druckluftfluss ermöglicht, wird vorzugsweise in einer dritten Schaltstufe erreicht, in welcher beide Steuerkolben der Vorsteuerung gemeinsam mit Steuerdruck beaufschlagt werden. Hierbei addiert sich der Schalthub des ersten Steuerkolbens mit dem Schalthub des zweiten Steuerkolbens, so dass der Stößel seinen Maximalhub vollführt, um die Ventilmechanik in die vollgeöffnete Ventilstellung zu überführen.

Gemäß eines anderen Aspekts der Erfindung wird vorgeschlagen, sowohl die Steuerkolben als auch deren jeweiligen Schalthübe unterschiedlich zu bemessen, um in Abstimmung mit dem Steuerdruck sowie insbesondere den hierzu entgegengesetzt auf die Steuerkolben einwirkenden Federkräften eine schaltsichere Ventilcharakteristik zu erreichen, ohne hierfür viel Bauraum zu beanspruchen. Vorzugsweise sollte demnach der Schalthub des ersten Steuerkolbens größeren Durchmessers größer bemessen sein als der Schalthub des zweiten Steuerkolbens kleineren Durchmessers, welcher erfindungsgemäß in den ersten Steuerkolben eingesetzt ist und daher konstruktionsbedingt kleinere geometrische Abmessungen als der erste Steuerkolben aufweisen muss. Mit dem geringeren Schalthub des zweiten Steuerkolbens lässt sich eine entsprechend hohe Drosselwirkung seitens der Ventilmechanik erzielen. Somit begünstigt die erfindungsgemäße Ausbildung der pneumatischen Vorsteuerung den mit der Ventilanordnung erreichbaren hohen Drosselungsgrad.

Gemäß einer anderen die Erfindung verbessernden Maßnahme ist jedem der beiden Steuerkolben eine Rückstellfeder zugeordnet. So wird vorgeschlagen, dass der zweite Steuerkolben kleineren Durchmessers über den Stößel entgegen der Kraft der Ventilrückstellfeder mit Steuerdruck beaufschlagbar ist. Somit braucht für die Rückstellfeder des zweiten Steuerkolbens kein eigenes Federelement vorgesehen werden. Die Ventilrückstellfeder übernimmt diese Aufgabe in funktionsintegrierter Weise.

Dagegen sollte dem ersten Steuerkolben größeren Durchmessers eine eigene Kolbenrückstellfeder zugeordnet sein. Es wird vorgeschlagen, diese Kolbenrückstellfeder im Ventilgehäuse zwischen dem Bereich der Ventilmechanik und der Vorsteuerung unterzubringen. Einerseits stützt sich die Kolbenrückstellfeder gegen das Ventilgehäuse und andererseits gegen den Boden des ersten Steuerkolbens ab, welcher gegenüberliegend steuerdruckbeaufschlagt ist. Die Unterbringung dieser Kolbenrückstellfeder erfolgt insoweit besonders platzsparend.

Zur Umsetzung von mehr als drei Ventilstellungen, nämlich der geschlossenen, mehr als einer gedrosselten und der geöffneten Ventilstellung, kann die erfindungsgemäße Ventilanordnung optional mit einem weiteren Schalthub ausgestattet sein. Dieser weitere Schalthub wird durch kolbenseitige und/oder gehäuseseitige Absätze zwischen dem ersten Steuerkolben und dem zweiten Steuerkolben gebildet. Der weitere Schalthub ist hierbei kleiner als der Schalthub des ersten Steuerkolbens. Wird der weitere Schalthub jedoch größer als der Schalthub des ersten Steuerkolbens dimensioniert, so würde gemäß einer weiteren Ausführungsform der Ventilmechanik die Schaltstufe mit einem weiteren (zweiten) gedrosselten Druckluftfluss ausgeschlossen, da aufgrund der übrigen Konstruktionsparametern der Steuerdruck des zweiten Steuerkolbens Vorrang hätte.

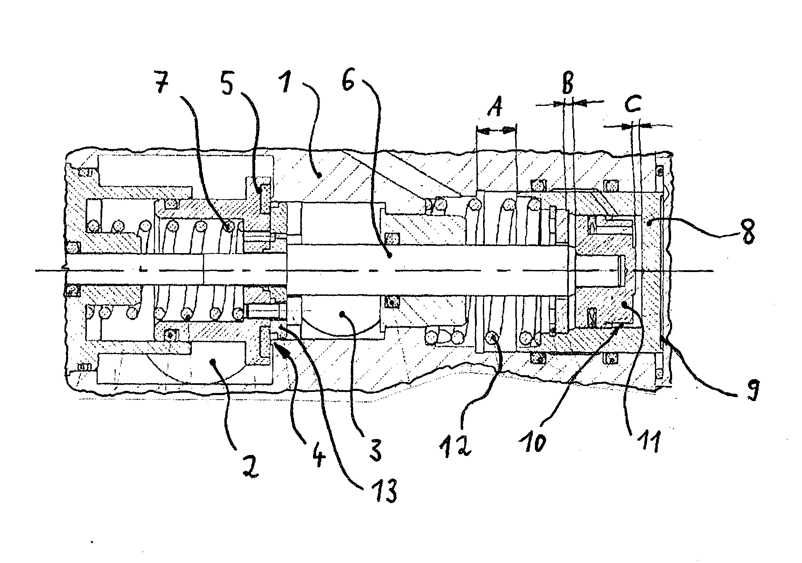

Weitere die Erfindung verbessernde Maßnahmen werden nachstehend gemeinsam mit der Beschreibung eines bevorzugten Ausführungsbeispiels der Erfindung anhand der einzigen Figur näher dargestellt.

Die Figur zeigt einen Längsschnitt durch eine mehrstufig schaltbare vorgesteuerte Ventilanordnung, die als Sitzventil ausgebildet ist.

Gemäß Figur besitzt ein - hier nur ausschnittsweise im Bereich der Ventilmechanik dargestelltes - Ventilgehäuse 1 einen Speisedruckanschluss 2 sowie eine Arbeitsanschluss 3. Die Ventilmechanik weißt eine normal-geschlossene 2/2-Ventilfunktion auf, die durch ein Sitzventil realisiert ist. Das Sitzventil umfasst einen gehäusefesten Ventilsitz 4, welcher mit einem zugeordneten Verschlusselement 5 nach Maßgabe einer pneumatischen Vorsteuerung über eine koaxial verlaufenden und axial bewegbaren Stößel 6 von der hier dargestellten vollständig geschlossenen Ventilstellung über eine gedrosselte Ventilzwischenstellung in die geöffnete Ventilstellung überführbar ist. Eine ebenfalls im Ventilgehäuse 1 integrierte Ventilrückstellfeder 7 hält das Verschlusselement 5 des Sitzventils bei druckloser Vorsteuerung in der geschlossenen Schaltstellung.

Die pneumatische Vorsteuerung besteht aus einem ersten Steuerkolben 8, der in einer im Ventilgehäuse 1 ausgebildeten ersten Steuerkammer 9 untergebracht ist, und der eine koaxiale Ausnehmung zur Bildung einer zweiten Steuerkammer 10 enthält. In diese zweite Steuerkammer 10 ist ein zweiter Steuerkolben 11 eingesetzt. Vom zweiten Steuerkolben 11 aus verläuft der Stößel 6 in Richtung der Ventilmechanik.

Eine additive Steuerdruckbeaufschlagung beider Steuerkammern 9 und 10 führt zu einem teleskopartigen Ausfahren der Steuerkolben 8 und 11, worüber sich ein mehrstufiger Schalthub für die Ventilmechanik erzeugen lässt. Durch den mehrstufigen Schalthub kann die zwischen der geschlossenen und geöffneten Ventilstellung liegende Schaltstufen für einen gedrosselten Druckluftfluss eingenommen werden.

Für den gedrosselten Druckluftfluss erfolgt in der ersten Schaltstufe eine exklusive Steuerdruckbeaufschlagung des zweiten Steuerkolbens 11 der Vorsteuerung. Bei diesem Ausführungsbeispiel ist ein weiterer gedrosselter Druckluftfluss, der gegenüber dem vorstehend erwähnten ersten gedrosselten Druckluftfluss einen höheren Strömungsquerschnitt aufweisst dadurch realisiert, dass in einer zweiten Schaltstufe eine exklusive Steuerdruckbeaufschlagung des ersten Steuerkolbens 8 erfolgt. Der ungedrosselte Druckluftfluss, welcher der vollständig geöffneten Ventilstellung entspricht, wird durch eine dritte Schaltstufe erreicht, bei der beide Steuerkolben 8 und 11 mit Steuerdruck beaufschlagt werden. Diese Schaltlogik entspricht der nachfolgenden Matrix:

| Schaltstufe | 1. Steuerkolben beaufschlagt | 2. Steuerkolben beaufschlagt | Schalthub |
|---|---|---|---|
| 0 | - | - | O |
| 1 | - | x | B |
| 2 | x | - | A-C |
| 3 | x | x | A+B |

bei diesem Ausführungsbeispiel ist der Schalthub A des ersten Steuerkolbens 8 größeren Durchmessers größer als der Schalthub B des zweiten Steuerkolbens 11 kleineren Durchmessers. Wird nur der erste Steuerkolben 8 mit Druck beaufschlagt, dann stellt sich ein weiterer Schalthub A minus C ein. Der vierte und größte Ventilhub stellt sich optional beim Beaufschlagen beider Steuerkolben ein.

Die Rückstellung der beiden Steuerkolben 8 und 11 bei druckloser Vorsteuerung erfolgt durch Federkräfte. Hierzu wird der zweite Steuerkolben 11 kleineren Durchmessers über den Stößel 6 durch die Ventilrückstellfeder 7 beaufschlagt. Dagegen wird der erste Steuerkolben 8 größeren Durchmessers durch eine diesem zugeordnete Kolbenrückstellfeder 12 entgegen der Wirkrichtung des Steuerdrucks beaufschlagt. Die Kolbenrückstellfeder 12 ist im Ventilgehäuse 1 zwischen dem Bereich der Ventilmechanik und der Vorsteuerung platzsparend angeordnet. Als Drosselmittel im Sinne der Erfindung wird im Bereich des Verschlusselements 5 eine Drosselplatte 13 angeordnet.

Die Erfindung ist nicht beschränkt auf das vorstehend beschriebene Ausführungsbeispiel. Es sind vielmehr auch Abwandlung hiervon denkbar, welcher vom Schutzbereich der nachfolgenden Ansprüche mit umfassen. So ist es beispielsweise auch möglich, durch das erfindungsgemäße Lösungsprinzip mehr als drei oder die hier maximal vier vorgestellten Ventilstellungen zu realisieren.

### Bezugszeichenliste

- 1: Ventilgehäuse
- 2: Speisedruckanschluss
- 3: Arbeitsleitungsanschluss
- 4: Ventilsitz
- 5: Verschlusselement
- 6: Stößel
- 7: Ventilrückstellfeder
- 8: erster Steuerkolben
- 9: erste Steuerkammer
- 10: zweite Steuerkammer
- 11: zweiter Steuerkolben
- 12: Kolbenrückstellfeder
- 13: Drosselelement

- A: Schalthub des ersten Steuerkolbens
- B: Schalthub des zweiten Steuerkolbens
- C: weiterer Schalthub

## Patentansprüche

1. Vorgesteuerte Ventilanordnung mit mindestens einer in einem Ventilgehäuse (1) untergebrachten Ventilmechanik zum mehrstufigen Schalten eines Druckluftflusses zwischen einem Speisedruckanschluss (2) und einem Arbeitsleitungsanschluss (3), wobei über Drosselmittel in mindestens einer Schaltstufe ein gedrosselter Druckluftflusses schaltbar ist,
**dadurch gekennzeichnet, dass** die pneumatische Vorsteuerung einen ersten Steuerkolben (8) umfasst, der in einer im Ventilgehäuse (1) ausgebildeten ersten Steuerkammer (9) untergebracht ist, und der eine koaxiale Ausnehmung zur Bildung einer zweiten Steuerkammer (10) enthält, in der ein zweiter Steuerkolben (11) untergebracht ist, so dass eine additive Steuerdruckbeaufschlagung der Steuerkammern (9, 10) ein teleskopartiges Ausfahren eines vom zweiten Steuerkolben (11) ausgehenden Stößels (6) zur Erzeugung eines mehrstufigen Schalthubs für die Ventilmechanik erzeugt, um in mindestens einer zwischen der geschlossenen und geöffneten Ventilstellung liegenden Schaltstufe der Ventilmechanik den gedrosselten Druckluftfluss zu realisieren.

2. Vorgesteuerte Ventilanordnung nach Anspruch 1,
**dadurch gekennzeichnet, dass** die Ventilmechanik nach Art eines Sitzventils ausgebildet ist, umfassend einen gehäusefesten Ventilsitz (4) mit einem zugeordneten Verschlusselement (5), das die pneumatische Vorsteuerung über den Stößel (6) betätigt.

3. Vorgesteuerte Ventilanordnung nach Anspruch 2,
**dadurch gekennzeichnet, dass** eine im Ventilgehäuse (1) integrierte Ventilrückstellfeder (7) das Verschlusselement (5) des Sitzventils bei druckloser Vorsteuerung in der geschlossenen Schaltstellung hält.

4. Vorgesteuerte Ventilanordnung nach Anspruch 1,
**dadurch gekennzeichnet, dass** für einen ersten gedrosselten Druckluftfluss in einer ersten Schaltstufe eine exklusive Steuerdruckbeaufschlagung des zweiten Steuerkolbens (11) der Vorsteuerung erfolgt.

5. Vorgesteuerte Ventilanordnung nach Anspruch 1,
**dadurch gekennzeichnet, dass** für einen weiteren gedrosselten Druckluftfluss in einer zweiten Schaltstufe eine exklusive Steuerdruckbeaufschlagung des ersten Steuerkolbens (8) der Vorsteuerung erfolgt.

6. Vorgesteuerte Ventilanordnung nach Anspruch 1,
**dadurch gekennzeichnet, dass** für einen ungedrosselten Druckluftfluss in einer dritten Schaltstufe eine Steuerdruckbeaufschlagung beider Steuerkolben (8, 11) der Vorsteuerung erfolgt.

7. Vorgesteuerte Ventilanordnung nach Anspruch 1,
**dadurch gekennzeichnet, dass** der Schalthub (A) des ersten Steuerkolbens (8) größeren Durchmessers größer als der Schalthub (B) des zweiten Steuerkolbens (11) kleineren Durchmessers ist.

8. Vorgesteuerte Ventilanordnung nach einem der vorstehenden Ansprüche,
**dadurch gekennzeichnet, dass** der zweite Steuerkolben (11) kleineren Durchmessers über den Stößel (6) entgegen der Kraft der Ventilrückstellfeder (7) mit Steuerdruck beaufschlagbar ist.

9. Vorgesteuerte Ventilanordnung nach einem der vorstehenden Ansprüche,
**dadurch gekennzeichnet, dass** der erste Steuerkolben (8) größeren Durchmessers entgegen der Kraft einer im Ventilgehäuse (1) zwischen dem Bereich der Ventilmechanik und der Vorsteuerung angeordneten und bodenseitig am ersten Steuerkolben (8) zur Anlage kommenden Kolbenrückstellfeder (12) mit Steuerdruck beaufschlagbar ist.

10. Vorgesteuerte Ventilanordnung nach einem der vorstehenden Ansprüche,
**dadurch gekennzeichnet, dass** ein axialer Abstand zwischen dem ersten Steuerkolben (8) und dem zweiten Steuerkolben (11) einen weiteren Schalthub (C) bildet.

## Claims

1. A pilot-controlled valve arrangement having at least one valve mechanism, which is accommodated in a valve housing (1), for multi-stage switching of a compressed air flow between a feed pressure port (2) and a working line port (3), wherein, in at least one switching stage, a throttled compressed air flow can be generated by throttling means,
**characterized in that** the pneumatic pilot controller comprises a first control piston (8) which is accommodated in a first control chamber (9) formed in the valve housing (1) and which comprises a coaxial recess for forming a second control chamber (10) in which a second control piston (11) is accommodated, such that an additive action of control pressure on the control chambers (9, 10) generates a telescopic extension of a plunger (6), which extends from the second control piston (11), for generating a multi-stage switching stroke for the valve mechanism in order to realize the throttled compressed air flow in at least one switching stage, which lies between the closed and open valve positions, of the valve mechanism.

2. The pilot-controlled valve arrangement as claimed in claim 1,
**characterized in that** the valve mechanism is formed in the manner of a seat valve, comprising a valve seat (4) which is fixed with respect to the housing and which has an associated closure element (5) which actuates the pneumatic pilot controller via the plunger (6).

3. The pilot-controlled valve arrangement as claimed in claim 2,
**characterized in that** a valve restoring spring (7) integrated in the valve housing (1) holds the closure element (5) of the seat valve in the closed position when the pilot controller is unpressurized.

4. The pilot-controlled valve arrangement as claimed in claim 1,
**characterized in that**, for a first throttled compressed air flow, in a first switching stage, exclusively the second control piston (11) of the pilot controller is acted on with control pressure.

5. The pilot-controlled valve arrangement as claimed in claim 1,
**characterized in that**, for a further throttled compressed air flow, in a second switching stage, exclusively the first control piston (8) of the pilot controller is acted on with control pressure.

6. The pilot-controlled valve arrangement as claimed in claim 1,
**characterized in that**, for an unthrottled compressed air flow, in a third switching stage, both control pistons (8, 11) of the pilot controller are acted on with control pressure.

7. The pilot-controlled valve arrangement as claimed in claim 1,
**characterized in that** the switching stroke (A) of the first control piston (8) of larger diameter is larger than the switching stroke (B) of the second control piston (11) of smaller diameter.

8. The pilot-controlled valve arrangement as claimed in one of the preceding claims,
**characterized in that** the second control piston (11) of smaller diameter can be acted on with control pressure via the plunger (6) counter to the force of the valve restoring spring (7).

9. The pilot-controlled valve arrangement as claimed in one of the preceding claims,
**characterized in that** the first control piston (8) of larger diameter can be acted on with control pressure counter to the force of a piston restoring spring (12) which is arranged in the valve housing (1) between the region of the valve mechanism and the pilot controller and which abuts against the base of the first control piston (8).

10. The pilot-controlled valve arrangement as claimed in one of the preceding claims, **characterized in that** an axial spacing between the first control piston (8) and the second control piston (11) forms a further switching stroke (C).

## Revendications

1. Agencement de soupape piloté, comprenant au moins un mécanisme de soupape logé dans un corps (1) de soupape, pour la commutation à plusieurs étages d'un flux d'air comprimé entre un raccord (2) de pression d'alimentation et un raccord (3) de conduit de travail, dans lequel un flux d'air comprimé étranglé peut être établi dans au moins un étage de commutation par l'intermédiaire d'un moyen d'étranglement, **caractérisé en ce que** le pilotage pneumatique comprend un premier piston (8) de commande, qui est logé dans une première chambre (9) de commande constituée dans le corps (1) de la soupape et qui comporte un évidement coaxial pour la formation d'une deuxième chambre (10) de commande, dans laquelle est logé un deuxième piston (11) de commande, de sorte qu'une alimentation additive en pression de commande des chambres (9, 10) de commande produit un déploiement télescopique d'un poussoir (6) partant du deuxième piston (11) de commande pour la production d'une course de commutation à plusieurs étages du mécanisme de la soupape, afin de réaliser le flux d'air comprimé étranglé dans au moins un stade de commutation du mécanisme de la soupape se trouvant entre la position fermée et la position couverte de la soupape.

2. Agencement de soupape piloté suivant la revendication 1, **caractérisé en ce que** le mécanisme de la soupape est constitué à la manière d'une soupape à siège, comprenant un siège (4) de soupape fixé au corps et ayant un élément (7) obturateur associé, qui actionne le pilotage pneumatique par l'intermédiaire du poussoir (6).

3. Agencement de soupape piloté suivant la revendication 2, **caractérisé en ce qu'**un ressort (7) de rappel de soupape intégré au corps (1) de la soupape maintient l'élément obturateur de la soupape à siège dans la position de commutation fermée pour une précommande sans pression.

4. Agencement de soupape piloté suivant la revendication 1, **caractérisé en ce que**, pour un flux d'air comprimé étranglé dans un premier étage de commutation, a lieu une alimentation exclusive en pression de commande du deuxième piston (11) de commande de la précommande .

5. Agencement de soupape piloté suivant la revendication 1, **caractérisé en ce que**, pour un autre flux d'air comprimé étranglé dans un deuxième étage de commutation, a lieu une alimentation exclusive en pression de commande du premier piston (8) de commande de la précommande.

6. Agencement de soupape piloté suivant la revendication 1, **caractérisé en ce que**, pour un flux d'air comprimé non étranglé dans un troisième étage de commutation, a lieu une alimentation en pression de commande des deux pistons (8, 11) de commande de la précommande.

7. Agencement de soupape piloté suivant la revendication 1, **caractérisé en ce que** la course (A) de commutation du premier piston (8) de commande de plus grand diamètre est plus grande que la course (B) de commutation du deuxième piston (11) de commande de diamètre plus petit.

8. Agencement de soupape piloté suivant l'une des revendications précédentes,
**caractérisé en ce que** le deuxième piston (11) de commande de diamètre plus petit est alimenté en une pression de commande par le poussoir (6) à l'encontre de la force du ressort (7) de rappel de la soupape.

9. Agencement de soupape piloté suivant l'une des revendications précédentes,
**caractérisé en ce que** le premier piston (8) de commande de diamètre plus grand est alimenté en pression de commande à l'encontre de la force d'un ressort (12) de rappel de piston monté dans le corps (1) de la soupape entre la partie du mécanisme de la soupape et la précommande et venant en contact du côté du fond du premier piston (8) de commande.

10. Agencement de soupape piloté suivant l'une des revendications précédentes,
**caractérisé en ce qu'**une distance axiale entre le premier piston (8) de commande et le deuxième piston (11) de commande forme une autre course (C) de commutation.
